# FASCICULE DE BREVET EUROPEEN

(11) **EP 2 168 710 B1**
(45) Date de publication et mention de la délivrance du brevet: **08.05.2013**
(21) Numéro de dépôt: 10150100.5
(22) Date de dépôt: 22.06.2007
(51) Int. Cl.: B23K 26/14, B23K 26/26, B23K 26/32

(54) **Procédé de soudage hybride laser-arc de pièces métalliques revêtues contenant principalement de l'aluminium et du silicium**
Verfahren zum Laser-Lichtbogen-Schweissen von metallischen Werkstücken, die eine Beschichtung aus im wesentlichen Aluminium und Silizium enthalten
Method of laser-arc hybrid welding of metallic workpieces having a coating containing mainly aluminium and silicium

(30) Priorité: 12.07.2006 FR 0652928
(43) Date de publication de la demande: 31.03.2010
(62) Demande divisionnaire de: 07301142.1
(73) Titulaire: L'AIR LIQUIDE, Société Anonyme pour l'Etude et l'Exploitation des Procédés Georges Claude, 75007 Paris (FR)
(72) Inventeur: Briand, Francis, 75009, Paris (FR); Chovet, Corinne, 78700, Conflans Ste Honorine (FR); Dubet, Olivier, 78210, Saint Cyr l' Ecole (FR)
(74) Mandataire: Pittis, Olivier

(56) Documents cités:
- EP-A1- 1 669 153
- JP-A- 2000 204 463
- JP-A- 2002 160 082
- US-A1- 2005 011 870

## Description

La présente invention porte sur un procédé de soudage hybride laser-arc d'une ou plusieurs pièces métalliques présentant une couche ou un revêtement surfacique aluminié, c'est-à-dire contenant de l'aluminium conformément au préambule de la revendication 1 (voir, par exemple, US 2005/011870).

Les matériaux emboutissables à chaud, c'est-à-dire à environ 900 °C, comme l'USIBOR 1500 qui est formé d'acier 22 Mn B 5 (contenant notamment 0,22% de C, 1,25% de Mn et du B), à très haute limite d'élasticité (acier THLE) sont généralement recouvert d'une couche ou revêtement à base d'aluminium et de silicium, appelée « couche Al-Si », par exemple formée de 90% Al + 10% Si (% en masse), pour empêcher l'oxydation et donc la calamine d'apparaître pendant le traitement thermique.

En effet, en l'absence de cette couche Al-Si, si de la calamine apparaît en surface, la couche de calamine doit être retirée par sablage ou par toute autre technique équivalente, et donc nécessite une opération supplémentaire qui engendre un surcoût important et une perte de productivité au plan industriel.

En outre, la couche Al-Si sert aussi de lubrifiant de surface, lors de l'emboutissage à chaud de la tôle.

L'épaisseur de cette couche est généralement d'environ 30 µm sur de l'USIBOR 1500 par exemple et, après traitement thermique, elle atteint environ 40 à 45 µm, selon la durée du traitement, par diffusion du fer dans la couche et de l'aluminium dans le fer. La valeur haute de 45 µm est généralement une valeur limite car au-delà la couche devient trop cassante.

Cette couche Al-Si augmente les résistances de contact en soudage par point par résistance, ce qui suggère qu'elle est moins conductrice qu'un acier non revêtu.

Les pièces en acier réalisées avec ce type de revêtement sont principalement des pièces de structure, en particulier des pièces de véhicules automobiles, comme les pieds milieux, les renforts anti-intrusion, les traverses de pare-chocs... Toutefois, on utilise aussi des tubes d'acier recouverts d'une couche Al-Si pour fabriquer diverses structures, tels des pots d'échappements par exemple.

Les épaisseurs classiques de ces pièces revêtues sont comprises entre 0.8 mm et 2.5 mm.

De façon générale, l'utilisation de ce type de pièces avec revêtement Al-Si tend à se développer fortement car ce type de revêtement permet d'éviter notamment les dépôts de calamine susmentionnés, alors que ces pièces de structures sont emboutissables uniquement à chaud et que leurs caractéristiques mécaniques ne sont obtenues qu'après traitement thermique réalisé juste après le formage.

Cependant, ces tôles doivent être découpées avant d'être soudées puis embouties. Cette découpe se fait habituellement soit par cisaillage, soit par coupage par faisceau laser.

Le procédé de coupage laser présente l'avantage de ne pas apporter de revêtement sur les bords latéraux découpés. Toutefois, ce procédé est cher en termes d'investissement car il nécessite l'acquisition d'une installation complète de coupage laser, ce qui bloque sa diffusion au plan industriel.

Par ailleurs, le procédé de découpe par cisaillage est le moins coûteux, donc le plus diffusé dans l'industrie, mais présente l'inconvénient majeur d'entraîner une partie du revêtement Al-Si sur la tranche de la pièce et ce, par effet de glissement.

Or, lors d'une opération subséquente de soudage par faisceau laser en configuration bord-à-bord jointifs (raboutage), de tôles ou pièces d'acier aluminiées découpées par cisaillage, on constate, après soudage, la présence dans le cordon de soudure d'une phase moins résistante en traction que le métal de base et que la zone fondue.

Une analyse chimique de la composition de cette phase montre qu'elle contient un pourcentage d'aluminium (> 1.2% en masse) suffisamment important pour empêcher la transformation austénitique de l'acier. En effet, l'aluminium étant un élément alphagène, au delà d'une certaine teneur celui-ci empêche la transformation austénitique des aciers. Lors du refroidissement, la microstructure de la phase ne change pas et reste sous forme de ferrite δ, ayant une dureté proche de 230 Hv.

La matrice quand à elle subit une transformation austénitique puis martensitique/bainitique qui mène à une dureté de l'ordre de 450 Hv.

Des composés intermétalliques existent pour des valeurs d'aluminium de 13% (Fe₃Al), 33% (FeAl), etc... Ces valeurs ont été mesurées sur les échantillons réalisés en laser seul.

En d'autres termes, nous sommes en présence d'une phase moins résistante que la matrice et celle-ci entraîne une diminution des caractéristiques mécaniques de l'assemblage.

Cette phase n'est pas remise en solution dans la matrice lors du chauffage à 900°C (austénitisation) car la transformation austénitique est supprimée et, par conséquent, lors de l'emboutissage à 900°C qui suit l'opération de raboutage, il y a des risques de fissuration étant donné que cette phase a une résistance à la rupture moindre que la matrice sous forme d'austénite, à cette température. D'ailleurs, après essais mécaniques d'un tel cordon, on constate que la résistance globale de la soudure est plus faible que celle du métal de base, ce qui conduit à une pièce non conforme aux spécifications.

Le document US -A- 2005/0011870 propose de souder les matériaux revêtus d'une couche Al/Si par faisceau laser. Afin de produire une microstructure plus homogène, le faisceau laser est passé plusieurs fois de suite sur le joint de soudure.

Par ailleurs, on connaît le document JP -A- 2002-160082 qui propose de souder des plaques revêtues de zinc ou d'un alliage de zinc par mise en oeuvre de deux étapes successives de soudage, à savoir une première étape de soudage laser, et une seconde étape de soudage à l'arc.

Enfin, le document EP -A-1 669 153 propose de réaliser un soudage spot d'acier revêtus d'un alliage ternaire d'aluminium, de silice et de fer.

Le problème qui se pose est donc de proposer un procédé de soudage efficace de pièces aluminiées, c'est-à-dire de pièces présentant un revêtement Al-Si en surface, permettant notamment d'obtenir un joint de soudure présentant de bonnes caractéristiques, y compris lorsque les pièces ont été découpées par cisaillement et n'ont pas subi d'étape de préparation des surfaces de leurs tranches latérales.

La solution de l'invention est un procédé de soudage hybride laser/arc d'au moins une pièce d'acier présentant un revêtement surfacique tel que défini dans la revendication 1.

Conformément à l'invention, un arc électrique se combine au faisceau laser pour aller fondre le métal de la ou des pièces à assembler en venant frapper simultanément un site ou une zone de soudage commune unique.

Selon le cas, le procédé de l'invention peut comprendre l'une ou plusieurs des caractéristiques suivantes :
- le revêtement a une épaisseur comprise entre environ 30 µm et 45 µm
- le revêtement a une épaisseur d'environ 30 µm
- le revêtement surfacique est formé de 90% d'aluminium et 10% de silicium (% en masse).
- au moins une des pièces a une épaisseur comprise entre 0,5 et 4 mm, de préférence de l'ordre de 0,8 à 2,5 mm.
- au moins une des pièces présente, préalablement à son soudage, des dépôts dudit revêtement, notamment de l'Al/Si, sur la surface d'une de ses tranches latérales.
- l'arc est délivré par une électrode de soudage en tungstène, c'est-à-dire une torche TIG.
- l'arc se forme à l'extrémité d'un fil fusible.
- pendant le soudage, on met en oeuvre une protection gazeuse d'au moins une partie du cordon de soudage en utilisant un gaz de protection choisi parmi des mélanges Hélium/Argon ou Argon pur.

L'invention va être mieux comprise grâce à la description suivante, donnée à titre illustratif mais non limitatif, en références aux Figures annexées.

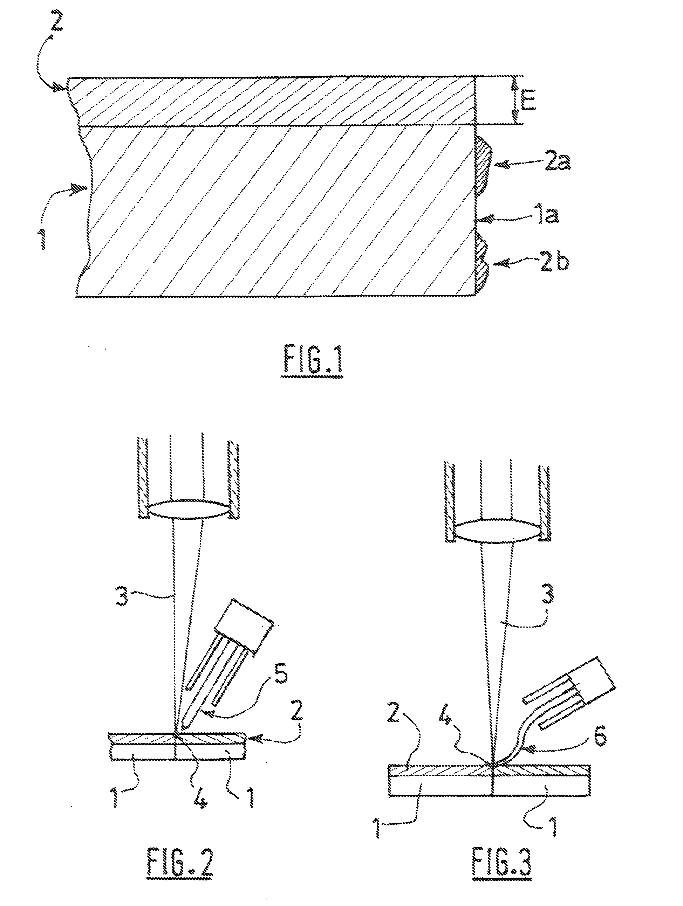

La Figure 1 représente un schéma, en coupe transversale, d'une pièce 1 d'acier aluminiée, c'est-à-dire recouverte d'une couche 2 ou revêtement Al-Si, à savoir une couche surfacique à base d'aluminium et de silicium, par exemple formée de 90% de Al + 10% de Si et destinée notamment à empêcher l'oxydation et donc l'apparition de calamine après traitement thermique de la pièce.

La pièce a une épaisseur de par exemple 1,5 mm et la couche Al-Si, par exemple, une épaisseur (E) de 30 µm environ. Cette pièce 1 a été découpée par cisaillage, ce qui a entraîné, par effet de glissement, des dépôts néfastes 2a, 2b d'une partie du revêtement 2 en Al-Si sur la tranche 1a de la pièce 1.

Les Figures 2 et 3 schématisent deux modes de réalisation de procédés hybride laser-arc selon l'invention pour assembler ensemble deux pièces 1 d'acier aluminiées découpées par cisaillage, telle la pièce de la Figure 1.

Plus précisément, la Figure 2 montre le principe d'un procédé de soudage hybride laser-TIG alors que la Figure 3 représente le principe d'un procédé soudage hybride laser-MIG/MAG.

En effet, si l'on désire augmenter le taux de dilution de l'acier dans le cordon de soudure pour diminuer la teneur en aluminium en zone fondue et améliorer ainsi l'homogénéité de celle-ci, on réalise plutôt un soudage hybride laser-TIG (Fig. 2).

Dans ce cas, le faisceau laser 3 est combiné à un arc électrique 4 délivré par une torche de soudage TIG équipée d'une électrode 5 non fusible en tungstène.

L'utilisation du soudage hybride laser-TIG, en configuration faisceau laser devant l'arc, c'est-à-dire que le laser va frapper au moins une pièce à souder immédiatement avant l'arc, permet d'augmenter la taille de la zone fondue et par conséquent permet une participation accrue de l'acier, qui est pauvre en aluminium (élément alphagène) et riche en manganèse (élément gamagène), plus importante en zone fondue.

L'aluminium étant apporté uniquement par la couche de protection Al-Si, des mesures montrent que la proportion de revêtement vaporisé pendant l'opération de soudage est beaucoup plus importante que la valeur mesurée en zone fondue.

L'apport d'un arc derrière le laser et/ou d'une source d'énergie supplémentaire, par exemple défocalisation du faisceau laser ou tache focale oblongue, permet d'homogénéiser la zone fondue, et donc de supprimer les concentrations locales d'aluminium supérieures à 1.2% qui sont créatrices de phases de ferrite δ.

Autrement dit, opérer un soudage hybride laser-TIG permet de diminuer la proportion d'aluminium en zone fondue par augmentation du volume de métal de fondu, ainsi qu'une homogénéisation de la zone fondue éliminant ainsi les concentrations locales supérieures à 1,2 % d'aluminium.

Par contre, si l'on souhaite plutôt apporter des éléments gamagènes, tels que Mn, Ni, Cu, etc..., de manière à augmenter le domaine austénitique permettant les transformations de phases dans la soudure, c'est-à-dire pour contrer l'effet alphagène de l'aluminium tout en améliorant l'homogénéité de la zone fondue, alors on réalise préférentiellement un soudage hybride laser-MIG (Fig. 3).

Dans ce cas, le faisceau laser 3 est combiné à un arc électrique 4 délivré par une torche de soudage MIG/MAG équipée d'une électrode filaire 6 fusible, tel un fil 6 de soudage fourré (*flux cored wire* en anglais) ou plein (*solid wire* en anglais). Le choix du fil 6 le plus adapté se fait en fonction de la composition du métal de base, des caractéristiques de cordon souhaitées...

En fait, le soudage hybride laser-MIG, en configuration laser devant l'arc, permet d'utiliser un fil fourré ou analogue contenant des éléments gamagènes (Mn, Ni, Cu, etc...) favorable au maintien d'une transformation austénitique dans toute la zone fondue.

L'apport d'énergie supplémentaire de l'arc électrique et/ou la défocalisation du faisceau laser permettent d'homogénéiser la zone fondue et, par conséquent, de supprimer la présence de ferrite δ.

### Exemple comparatif

On a soudé 2 pièces en USIBOR 1500 de 1.8 mm d'épaisseur avec couche Al/Si de 30 µm Les pièces présentaient des dépôts de Al sur leur tranche qui sont caractéristiques d'un découpage par cisaillage.

Le gaz utilisé pour la protection est de l'Arcal 37 commercialisé par la société AIR LIQUIDE, à savoir un mélange de 70% d'hélium et 30% d'argon (% en volume).

On a soudé ces pièces en utilisant :
- le procédé hybride arc-laser de l'invention avec un laser de type CO₂ d'une puissance de 6 kW ayant une focale de 250 mm, un arc généré par une torche de type TIG/AC d'intensité 200 A et de tension 16 V, une distance électrode/faisceau de 2 mm, une vitesse de soudage de 4 m/min.
- et à titre comparatif, un procédé de soudage laser classique d'une puissance de 6 kW avec une focale de 250 mm et une vitesse de 4 m/min.

Les résultats comparatifs obtenus sont donnés dans le Tableau suivant.

| Procédé | Rp0.2 (N/mm²) | Rm (N/mm²) | A % |
|---|---|---|---|
| Laser classique | 388 | 502 | 6.1 |
| Hybride laser+TIG (invention) | 384 | 567 | 25 |

| | | | |
|---|---|---|---|
| Rp02 : est la limite d'élasticité du matériau, c'est-à-dire de déformation élastique Rm : est la limite de rupture du matériau après déformation plastique A % : est l'allongement du matériau (valeur utile pour l'emboutissage). | | | |

Les résultats obtenus montrent que les valeurs de tractions (Rm et A%) sont favorables au procédé hybride laser-TIG puisqu'avec le procédé selon l'invention, la limite de déformation élastique du matériau soudé est sensiblement identique, alors qu'on observe une amélioration très notable de la limite de rupture après déformation plastique et de celle d'allongement du matériau.

## Revendications

1. Procédé de soudage hybride laser/arc d'au moins une pièce d'acier (1) présentant un revêtement (2) surfacique où le revêtement (2) contient principalement de l'aluminium et du silicium et a une épaisseur (E) comprise entre 5 et 45 µm, un faisceau laser (3) et un arc (4) **caractérisé par** les aspects suivants :
- on met en oeuvre un faisceau laser (3) et un arc (4) électrique se combinant l'un à l'autre pour frapper simultanément un site ou une zone de soudage commune unique et y fondre le métal de la ou des pièces à assembler,
- le faisceau laser (3) est généré par un générateur laser de type CO₂, à diodes ou à fibre d'ytterbium, et
- on soude deux pièces mises en position bout à bout jointif ou les deux bords d'une même pièce lesquels bords sont rapprochés l'un de l'autre.

2. Procédé selon la revendication 1, **caractérisé en ce que** le revêtement (2) a une épaisseur (E) comprise entre environ 30 µm et 45 µm.

3. Procédé selon l'une des revendications 1 ou 2, **caractérisé en ce que** le revêtement (2) a une épaisseur (E) d'environ 30 µm.

4. Procédé selon l'une des revendications 1 à 3, **caractérisé en ce que** le revêtement (2) surfacique est formé de 90% d'aluminium et 10% de silicium (% en masse).

5. Procédé selon l'une des revendications 1 à 4, **caractérisé en ce qu'**au moins une des pièces (1) a une épaisseur comprise entre 0,5 et 4 mm.

6. Procédé selon l'une des revendications 1 à 5, **caractérisé en ce qu'**au moins une des pièces (1) présente, préalablement à son soudage, des dépôts (2a, 2b) dudit revêtement (2), notamment de l'Al/Si, sur la surface d'une de ses tranches (1a) latérales.

7. Procédé selon l'une des revendications 1 à 6, **caractérisé en ce que** l'arc (4) est délivré par une électrode de soudage en tungstène (5).

8. Procédé selon l'une des revendications 1 à 6, **caractérisé en ce que** l'arc (4) se forme à l'extrémité d'un fil fusible (6).

9. Procédé selon l'une des revendications 1 à 8, **caractérisé en ce que**, pendant le soudage, on met en oeuvre une protection gazeuse d'au moins une partie du cordon de soudage en utilisant un gaz de protection choisi parmi l'argon pur et les mélanges argon/hélium.

10. Procédé selon la revendication 5, **caractérisé en ce qu'**au moins une des pièces (1) a une épaisseur comprise entre 0,8 et 2,5 mm.

## Patentansprüche

1. Verfahren zum Laser-Lichtbogen-Hybridschweißen mindestens eines Stahlteils (1), das eine Oberflächenbeschichtung (2) aufweist, wobei die Beschichtung (2) hauptsächlich Aluminium und Silizium enthält und eine Dicke (E) zwischen 5 und 45 µm hat, **gekennzeichnet durch** die folgenden Aspekte:
es werden ein Laserstrahl (3) und ein elektrischer Lichtbogen (4) eingesetzt, die miteinander kombiniert werden, um gleichzeitig auf eine einzige gemeinsame Schweißstelle oder einen einzigen gemeinsamen Schweißbereich aufzutreffen und dort das Metall des oder der zu fügenden Teile zu schmelzen,
der Laserstrahl (3) wird von einem CO2-, Dioden- oder Ytterbiumfaser-Laser erzeugt, und
es werden zwei Teile zusammengeschweißt, die in eine aneinander anstoßende Position gebracht wurden, oder die beiden Ränder ein und desselben Teils, wobei diese Ränder aneinander angenähert wurden.

2. Verfahren nach Anspruch 1, **dadurch gekennzeichnet, dass** die Beschichtung (2) eine Dicke (E) zwischen etwa 30 µm und 45 µm aufweist.

3. Verfahren nach einem der Ansprüche 1 oder 2, **dadurch gekennzeichnet, dass** die Beschichtung (2) eine Dicke (E) von etwa 30 µm aufweist.

4. Verfahren nach einem der Ansprüche 1 bis 3, **dadurch gekennzeichnet, dass** die Oberflächenbeschichtung (2) aus 90 % Aluminium und 10 % Silizium gebildet wird (Massenanteil).

5. Verfahren nach einem der Ansprüche 1 bis 4, **dadurch gekennzeichnet, dass** mindestens eines der Teile (1) eine Dicke zwischen 0,5 und 4 mm aufweist.

6. Verfahren nach einem der Ansprüche 1 bis 5, **dadurch gekennzeichnet, dass** mindestens eines der Teile (1) vor seinem Schweißen Ablagerungen (2a, 2b) der Beschichtung (2), insbesondere von Al/Si, auf der Oberfläche einer seiner seitlichen Schnittflächen (1a) aufweist.

7. Verfahren nach einem der Ansprüche 1 bis 6, **dadurch gekennzeichnet, dass** der Lichtbogen (4) von einer Wolframschweißelektrode (5) geliefert wird.

8. Verfahren nach einem der Ansprüche 1 bis 6, **dadurch gekennzeichnet, dass** sich der Lichtbogen (4) am Ende eines Schmelzdrahts (6) bildet.

9. Verfahren nach einem der Ansprüche 1 bis 8, **dadurch gekennzeichnet, dass** während des Schweißens ein Gasschutz wenigstens eines Teils der Schweißnaht angewendet wird, indem ein Schutzgas verwendet wird, das aus reinem Argon und Argon/Helium-Gemischen gewählt ist.

10. Verfahren nach Anspruch 5, **dadurch gekennzeichnet, dass** mindestens eines der Teile (1) eine Dicke zwischen 0,8 und 2,5 mm aufweist.

## Claims

1. Process for laser-arc hybrid welding at least one steel workpiece (1) having a surface coating (2), the coating (2) containing mainly aluminium and silicon and having a thickness (E) of between 5 and 45 µm, **characterised by** the following aspects:
- a laser beam (3) and an electric arc (4) are provided which combine to strike simultaneously a single common welding site or zone and melt there the metal of the workpiece(s) to be assembled,
- the laser beam (3) is generated by a laser generator of the CO₂, diode or ytterbium fibre type, and
- two workpieces brought into position with their edges abutting each other, or the two edges of one and the same workpiece which have been brought together, are welded.

2. Process according to claim 1, **characterised in that** the coating (2) has a thickness (E) of between about 30 µm and 45 µm.

3. Process according to either claim 1 or claim 2, **characterised in that** the coating (2) has a thickness (E) of about 30 µm.

4. Process according to any of claims 1 to 3, **characterised in that** the surface coating (2) is formed from 90 % aluminium and 10 % silicon (% by weight).

5. Process according to any of claims 1 to 4, **characterised in that** at least one of the workpieces (1) has a thickness of between 0.5 and 4 mm.

6. Process according to any of claims 1 to 5, **characterised in that** at least one of the workpieces (1) has, prior to being welded, deposits (2a, 2b) of said coating (2), in particular of Al/Si, on the surface of one of its lateral edges (1 a).

7. Process according to any of claims 1 to 6, **characterised in that** the arc (4) is delivered by a tungsten welding electrode (5).

8. Process according to any of claims 1 to 6, **characterised in that** the arc (4) forms at the end of a consumable wire (6).

9. Process according to any of claims 1 to 8, **characterised in that**, during the welding, a gas shield is provided for at least part of the weld bead using a shielding gas chosen from pure argon and argon/helium mixtures.

10. Process according to claim 5, **characterised in that** at least one of the workpieces (1) has a thickness of between 0.8 and 2.5 mm.
